# EUROPÄISCHE PATENTANMELDUNG

(11) **EP 0 924 428 A2**
(43) Veröffentlichungstag der Anmeldung: **23.06.1999**
(21) Anmeldenummer: 98123736.5
(22) Anmeldetag: 14.12.1998
(51) Int. Cl.: F04C 2/344, F04C 13/00

(54) **Flügelzellenpumpe zum Fördern eines pastösen Gutes**

(30) Priorität: 19.12.1997 DE 29722550 U
(71) Anmelder: Wälchli, Hans, Dr., 8113 Boppelsen (CH)
(72) Erfinder: Wälchli, Hans, Dr., 8113 Boppelsen (CH)
(74) Vertreter: Blum, Rudolf Emil Ernst

(57) **Zusammenfassung**

Bei einer Flügelzellenpumpe (1) ist um die Antriebswelle (18) für den Rotor (4) ein Kanal (23) vorgesehen, welcher mit einer Unterdruckquelle verbunden ist. Durch den Unterdruckkanal kann durch eine schadhafte Dichtung hindurchtretendes Fördergut abgesaugt werden oder im Antriebsraum befindliche Stoffe werden vor Erreichen des Pumpenraumes abgesaugt, was bei einer Pumpe für Lebensmittel besonders vorteilhaft ist.

## Beschreibung

Die Erfindung betrifft eine Flügelzellenpumpe gemäss Oberbegriff des Anspruchs 1.

Flügelzellenpumpen zum Fördern und auch Portionieren eines pastösen Gutes sind allgemein bekannt. Wie in CH-A-674 121 gezeigt, ist dabei eine Antriebswelle für den Rotor der Flügelzellenpumpe vorgesehen, die diesen Rotor mit einem beliebigen, z.B. elektromotorischen, Antriebsmittel verbindet, welches z.B. in einem unterhalb des eigentlichen Pumpengehäuses befindlichen Raum angeordnet ist. Die Antriebswelle verläuft dann durch das Pumpengehäuse hindurch und ragt in die den Pumpenraum bildende Ausnehmung des Pumpengehäuses hinein, wobei der hineinragende Wellenstummel mit dem Rotor lösbar verbunden ist, um diesen und damit die Pumpenflügel im Betrieb anzutreiben bzw. um diesen für Reinigungszwecke von der Antriebswelle und aus dem Pumpengehäuse entfernen zu können.

In der Pumpe ist eine im Gehäuse gehaltene und an der Antriebswelle anliegende Dichtung vorgesehen, die gemäss der Figur 1 der Schrift CH-A-674 121 ein in einer Gehäuseringnut angeordneter O-Ring ist, welche den Pumpenraum gegenüber dem Antriebsraum abdichtet. Bei Alterung, Verschleiss oder einer Beschädigung der Dichtung besteht einerseits die Möglichkeit, dass Mengen des geförderten Gutes in den Antriebsraum gelangen. Wenn andererseits im Förderraum der Pumpe ein Unterdruck mittels einer Vakuumquelle erzeugt wird, wie dies in der CH-A-674 121 erwähnt ist, um die vollständige Füllung der einzelnen Kammern der Flügelzellenpumpe zu bewirken, so kann andererseits eine schadhafte Dichtung das Ansaugen von Luft aus dem Antriebsraum in den Pumpenraum bewirken. Dies kann einerseits zu einer nicht zulässigen Kontamination des Gutes mit im Antriebsraum vorhandenen Stoffen, z.B. Schmiermitteln, führen und andererseits dazu, dass der Unterdruck im Pumpenraum nicht in genügendem Masse aufgebaut werden kann, was zu einer ungleichmässigen Füllung der Förder- und Portionierkammern der Pumpe führen kann.

Der Erfindung liegt daher die Aufgabe zugrunde, eine Flügelzellenpumpe zu schaffen, welche die genannten Nachteile vermeidet.

Dies wird bei einer Flügelzellenpumpe der eingangs genannten Art mit den kennzeichnenden Merkmalen des Anspruchs 1 erreicht. Durch den Unterdruckkanal wird allfällig durch eine schadhafte Dichtung hindurchtretendes Gut abgesaugt oder im Antriebsraum befindliche Stoffe werden vor Einreichen des Pumpenraumes abgesaugt.

Vorzugsweise ist eine zweite Dichtung so angeordnet, dass der Unterdruckkanal zwischen den beiden Dichtungen liegt.

Nachfolgend werden Ausführungsbeispiele der Erfindung anhand der Zeichnungen näher erläutert. Dabei zeigt:
Figur 1 eine vereinfachte Draufsicht auf eine Flügelzellenpumpe; und
Figur 2 einen vereinfachten Vertikalschnitt durch eine Pumpe gemäss Figur 1.

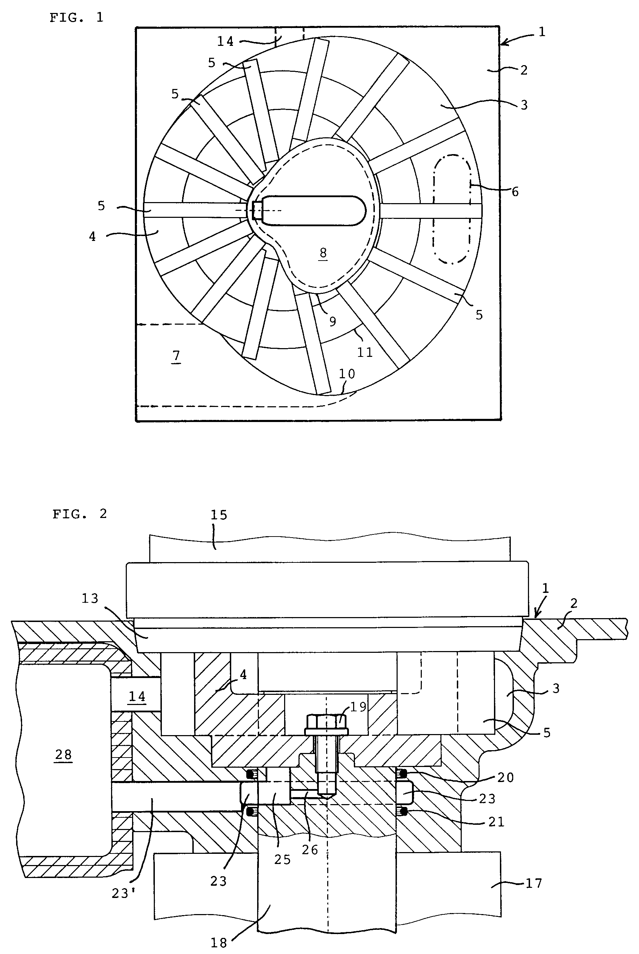

In Figur 1 ist in Draufsicht ohne Deckel eine Flügelzellenpumpe 1 in vereinfachter Form gezeigt, wie sie z.B. grundsätzlich aus CH-A-674 121 bekannt ist. Im nur angedeuteten Gehäuse 2 ist eine Ausnehmung 3 vorgesehen, deren Wandung 10 die sogenannte äussere Führungskurve für die Flügel 5, auch Schieber genannt, der Pumpe bildet, welche vorzugsweise aus Kunststoff bestehen. Die innere Führungskurve 9 ist an einem in der Gehäuseausnehmung 3 eingelegtem Körper 8 ausgebildet und ein Rotor 4 mit Nuten für die Flügel 5 treibt diese drehend an, wobei auf bekannte Weise ein Gut, vorzugsweise ein pastöses Gut, wie z.B. Wurstbrät zwischen einem Einlass 6 und einem Auslass 7 der Pumpe portioniert und gefördert wird. Der Einlass 6 ist als Oeffnung im Deckel, der auch als Druckplatte bezeichnet wird, der Pumpe vorgesehen und daher in Figur 1 nur strichpunktiert angedeutet.

Die Förderung und Portionierung des Gutes erfolgt durch die zwischen zwei benachbarten Flügeln gebildeten Kammern, welche weiter durch den Boden der Gehäuseausnehmung 3, dem Deckel und der Wandung 10 und der Aussenwandung 11 des Rotors 4 begrenzt sind. Vor dem Einlassbereich mündet eine Unterdrucköffnung 14 in die jeweilige Kammer, wodurch diese mit einer Saugpumpe bzw. einer Vakuumquelle verbunden und teilweise oder ganz evakuiert wird, was das vollständige, im wesentlichen Luftblasenfreie Befüllen der Kammer im Einlassbereich ermöglicht. Dieses ist bekannt.

Figur 2 zeigt einen Teil eines Vertikalschnittes durch eine Ausführungsform einer Flügelzellenpumpe gemäss der Erfindung, wobei diese grundsätzlich gemäss der Draufsicht von Figur 1 ausgestaltet ist. Gleiche Bezugszeichen wie in Figur 1 bezeichnen daher gleiche Elemente wie in dieser Figur. Die Flügelzellenpumpe 1 ist in Figur 2 mit dem Deckel bzw. der Druckplatte 13 dargestellt, auf der ein nur angedeuteter Fülltrichter 15 angeordnet ist, der mit dem Einlass 6 in Verbindung steht. Der in der Gehäuseausnehmung 3 des Gehäuses 2 angeordnete Rotor 4 ist im gezeigten Beispiel mit der Antriebswelle 18 mittels des Gewindebolzens 19 verschraubt. Die nur teilweise dargestellte Antriebswelle 18 verläuft von einem bekannten, hier nicht weiter dargestellten, Antrieb herkommend vom Maschinengestell 17 der Pumpe in das Pumpengehäuse 2 hinein. Eine Wellendichtung 20, im dargestellten Beispiel ein als O-Ring ausgeführter Wellendichtring, dichtet die Ausnehmung 3 gegen den Antriebsraum im Maschinengestell 17 ab. Gemäss der Erfindung ist nun dem Wellendichtring 20 benachbart und zum Maschinengestell 17 hin gelegen ein die Welle 18 umlaufender ringförmiger Kanal 23 vorgesehen, welcher über eine Zuleitung 23' mit einer Unterdruckquelle verbunden ist. Der Kanal 23 bildet also eine Unterdruckzone um die Welle herum, vorzugsweise als ringförmiger Kanal um die ganze Welle herum. Im gezeigten Beispiel führt die Zuleitung 23' in einen Unterdruckkasten 28, an den eine nicht dargestellte Saugpumpe als Unterdruckquelle angeschlossen ist. Weiter ist es im gezeigten Beispiel so, dass die Unterdruckquelle für den gegenüber dem atmosphärischen Druck verminderten Druck dieselbe Quelle ist, wie sie für die Unterdruckerzeugung in den Kammern der Pumpe verwendet wird, weshalb von der Kammer 28 die Einmündung 14 in die Gehäuseausnehmung 3 abgeht. Eine solche Ausführung wird bevorzugt. Es wären indes auch separate Unterdruckquellen möglich oder nur eine Unterdruckquelle für die Kammer 23 um die Welle, wenn in der Gehäuseausnehmung gar kein Unterdruck erzeugt wird und die Befüllung der Pumpe mit dem Gut ohne Unterdruck in den Kammern erfolgt.

Die Unterdruckzone 23 um die Welle 18 sorgt dafür, dass beim allfälligen Hindurchtreten des Gutes durch die schadhafte Dichtung 20 dieses nicht in den Antriebsraum gelangt, sondern vom Unterdruck abgesaugt wird. Auch ein umgekehrtes Hindurchtreten von Antriebsraumstoffen in den Pumpenraum durch die schadhafte Dichtung 20 würde nicht erfolgen, da solche Stoffe vorher in Richtung Unterdruckquelle abgesaugt würden. Wenn auf beiden Seiten der Dichtung derselbe Unterdruck herrscht, wie dies in der dargestellten bevorzugten Ausführungsform der Fall ist, wird ferner eine einseitige Belastung des Dichtungsringes vermieden.

Vorzugsweise ist zwischen dem Kanal 23 mit Unterdruck und dem Antriebsraum eine weitere Dichtung 21 angeordnet. Diese verhindert das Ansaugen von Luft aus dem Antriebsraum in den Kanal 23, was insbesonders vorteilhaft ist, wenn auch der Unterdruck für das Einbringen des Gutes in die Kammern der Pumpe aus der selben Quelle stammt, da dadurch stabilere Unterdruckverhältnisse herrschen als ohne die Dichtung 21. Ohne diese Dichtung 21 wirkt nur die Welle 18 selber und deren nicht dargestellte Lagerung als Dichtung, was indes je nach konstruktiver Ausgestaltung genügen kann.

Die in Figur 2 dargestellte Ausführung mit nahe zum Kanal 23 benachbarten Dichtungen 20 bzw. 21 ist bevorzugt, es können je nach konstruktiver Ausgestaltung der Pumpe diese Dichtungen aber auch weiter entfernt vom Kanal 23 sein.

In Figur 2 ist eine weitere bevorzugte Ausführungsform dargestellt, bei welcher in der Welle 18 eine zum Kanal 23 und zum Pumpenraum bzw. zur Gehäuseausnehmung 3 hin führende Ausnehmung 25 vorgesehen ist, welche z.B. von zwei aufeinandertreffenden Bohrungen gebildet ist. In der gezeigten Betriebsstellung der Pumpe mit an der Welle 18 befestigtem Rotor 4 ist die Ausnehmung 25 gegen den Pumpenraum 3 hin verschlossen und ohne Wirkung. Bei der Reinigung der Pumpe, zu welchem Zweck der Körper 8, die Flügel 5 und der Rotor 4 entnommen werden, letzterer nach Lösen des Gewindebolzens 19, dient die Ausnehmung 25 als Ablauf für das Reinigungwasser, was die Reinigung wesentlich erleichtert. Bevorzugterweise ist weiter die Bohrung in der Welle 18 zur Aufnahme des Gewindebolzens 19 ebenfalls mit dem Kanal 23 verbunden, im gezeigten Beispiel mittels einer Bohrung 26, was den Abfluss von Wasser auch aus der Bohrung für den Gewindebolzen 19 ermöglicht.

## Patentansprüche

1. Flügelzellenpumpe (1) zum Fördern eines pastösen Gutes, insbesondere eines Wurstbrätes, umfassend ein Gehäuse (2), einen in einer Gehäuseausnehmung (3) angeordneten, die Flügel (5) der Pumpe antreibenden Rotor (4) sowie eine Wellendichtung (20) für die im Gehäuse (2) laufende Antriebswelle (18) für den Rotor (4), dadurch gekennzeichnet, dass auf der gehäuseausnehmungs-abgewandten Seite der Wellendichtung (20) ein zur Welle hin offener Unterdruckkanal (23) vorgesehen ist, der mit einer Unterdruckquelle in Verbindung steht.

2. Flügelzellenpumpe nach Anspruch 1, dadurch gekennzeichnet, dass eine zweite Wellendichtung (21) derart angeordnet ist, dass der Unterdruckkanal (23) zwischen den beiden Wellendichtungen (20, 21) angeordnet ist.

3. Flügelzellenpumpe nach Anspruch 1 oder 2, dadurch gekennzeichnet, dass die Unterdruckquelle mit der Gehäuseausnehmung (3) zur Erzeugung eines Unterdrucks in den Förderkammern der Pumpe verbunden ist.

4. Flügelzellenpumpe nach einem der Ansprüche 1 bis 3, dadurch gekennzeichnet, dass in der Antriebswelle (18) eine zum Unterdruckkanal (23) und zum Rotor (4) hin offene Ausnehmung (25) vorgesehen ist.

5. Flügelzellenpumpe nach einem der Ansprüche 1 bis 4, dadurch gekennzeichnet, dass zur Verbindung des Rotors (4) mit der Antriebswelle (18) eine zur Aufnahme eines Gewindebolzens als Verbindungsmittel vorgesehene Gewindebohrung in der Antriebswelle (18) vorgesehen ist, welche mittels einer Ausnehmung (26) mit dem Unterdruckkanal (23) in Verbindung steht.
